# EUROPEAN PATENT SPECIFICATION

(11) **EP 0 736 584 B1**
(45) Date of publication and mention of the grant of the patent: **21.10.1998**
(21) Application number: 96302421.1
(22) Date of filing: 04.04.1996
(51) Int. Cl.: C09D 183/04, C04B 41/50

(54) **Hydrogen silsesquioxane resin coating composition**
Wasserstoff-Silsesquioxanharz Beschichtigungszusammensetzung
Composition de revêtement de résine de silsesquioxane hydrogenée

(30) Priority: 07.04.1995 US 418725
(43) Date of publication of application: 09.10.1996
(73) Proprietor: DOW CORNING CORPORATION, Midland Michigan 48686-0994 (US)
(72) Inventor: Syktich, Cecelia Marie, Saginaw, Michigan 48603 (US); Vincent, Gary Allen, Midland, Michigan 48640 (US); Scheibert, Kirsten Andrea, Sanford, Michigan 48657 (US)
(74) Representative: Kyle, Diana

(56) References cited:
- EP-A- 0 606 588
- US-A- 5 063 267

## Description

The present invention relates to a coating composition containing hydrogen silsesquioxane resin diluted in saturated alkyl hydrocarbons and mixtures thereof.

Hydrogen silsesquioxane resin (H-resin) and its uses in forming coatings on electronic devices is known in the art. For instance, US Patent 4,756,977 teaches a process of forming a coating on an electronic device comprising diluting H-resin in a solvent, applying the solution to the electronic device and then heating the coated device to convert the resin to a ceramic. The patent, however, only lists toluene and n-heptane as exemplary solvents. EP 606 588 discloses the use of other solvents, like aromatic, aliphatic such as hexane, heptane and octane, ketone, ester and silicone solvents, alone or in combination. The use of octane together with decane and/or isooctane is not disclosed.

Similarly, US Patent 5,320,868 includes additional solvents which are used for diluting H-resin. These include alcohols such as ethyl or isopropyl, aromatic hydrocarbons such as benzene or toluene, alkanes such as n-heptane or dodecane, ketones, cyclic dimethylpolysiloxanes, esters or glycol ethers. Again, this latter patent does not mention the solvents specifically claimed herein.

We have now found that specific hydrocarbons and blends thereof are stable and can be used to form desirable coatings on electronic devices.

The present invention introduces a coating composition containing between 10 and 40 weight percent of H-resin diluted in a solvent. The solvent comprises a mixture of octane with up to 40 weight percent decane and/or up to 80 weight percent isooctane.

The present invention is based on our unexpected finding that the solvent used to deposit a coating of H-resin can have a dramatic effect on the resultant coating quality. For instance, the solvent affects the stability of an H-resin solution, the quality of the resultant coating and the thickness of said coating.

Accordingly, we undertook an extensive review of solvents and found that saturated alkyl hydrocarbons and blends thereof can be used to form stable solutions of H-resin. These stable solutions, in turn, are used to deposit coatings which have excellent quality and unexpected thickness.

Because of these surprising advantages, the coating compositions of the present invention are particularly valuable on electronic substrates. Such coatings serve, for example, as protective coatings, interlevel dielectric layers, doped dielectric layers to produce transistor like devices, pigment loaded binder systems containing silicon to produce capacitor and capacitor like devices, multilayer devices, 3-D devices, silicon on insulator devices, coatings for superconductors and super lattice devices.

As used herein, the expression "ceramic" describes the hard, Si-O containing coatings obtained by our invention after heating the H-resin. These coatings contain both silica (SiO₂) materials as well as silica-like materials (e.g., SiO, Si₂O₃, etc.) which are not fully free of residual carbon, silanol (Si-OH) and/or hydrogen. The expression "electronic substrate" includes electronic devices or electronic circuits such as silicon based devices, gallium arsenide based devices, focal plane arrays, opto-electronic devices, photovoltaic cells and optical devices.

The compositions of the present invention contain between 10 and 40 weight percent H-resin and preferably between 15 and 30 weight percent H-resin dissolved in a solvent. The H-resins used in this invention include hydridosiloxane resins of the formula HSi(OH)ₓ(OR)_{y}O_{z/2}, in which each R is independently an organic group or a substituted organic group that, when bonded to silicon through the oxygen atom, forms a hydrolyzable substituent, x = 0-2, y = 0-2, z = 1-3 and x + y + z = 3. Examples of R include alkyls such as methyl, ethyl, propyl and butyl, aryls such as phenyl and alkenyls such as allyl or vinyl. These resins may be fully condensed (HSiO_{3/2})ₙ or they may be only partially hydrolyzed (i.e., containing some Si-OR) and/or partially condensed (i.e., containing some Si-OH). Although not represented by this structure, these resins may also contain a small number (e.g., less than 10%) of silicon atoms which have either 0 or 2 hydrogen atoms attached thereto or a small number of SiC bonds due to various factors involved in their formation or handling.

The above H-resins and methods for their production are known in the art. For example, US Patent 3,615,272 claims the production of a nearly fully condensed H-resin (which may contain up to 100-300 ppm silanol) by a process comprising hydrolyzing trichlorosilane in a benzenesulfonic acid hydrate hydrolysis medium and then washing the resultant resin with water or aqueous sulfuric acid. Similarly, US Patent 5,010,159 discloses an alternative method comprising hydrolyzing hydridosilanes in an arylsulfonic acid hydrate hydrolysis medium to form a resin which is then contacted with a neutralizing agent.

Other hydridosiloxane resins, such as those described by US Patent 4,999,397, those produced by hydrolyzing an alkoxy or acyloxy silane in an acidic, alcoholic hydrolysis medium; those shown in JP-As 59-178749, 60-86017 and 63-107122, or any other equivalent hydridosiloxane, will also function herein.

In a preferred embodiment of the invention, specific molecular weight fractions of the above H-resins may also be used in our process. Such fractions, and methods for their preparation, are more fully disclosed in US Patent 5,063,267. A preferred fraction comprises a material wherein at least 75% of the polymeric species have a molecular weight above 1200 and a more preferred fraction comprises material wherein at least 75% of the polymeric species have a molecular weight between 1200 and 100,000.

The H-resin coating material may also contain other ceramic oxide precursors. Examples of such ceramic oxide precursors include compounds of various metals such as aluminum, titanium, zirconium, tantalum niobium and/or vanadium, as well as various non-metallic compounds, such as those of boron or phosphorous which may be dissolved in solution, hydrolyzed and subsequently pyrolyzed, at relatively low temperatures and at relatively rapid reaction rates to form ceramic oxide coatings.

The above ceramic oxide precursor compounds generally have one or more hydrolyzable groups bonded to the above metal or non-metal, depending on the valence of the metal. The number of hydrolyzable groups to be included in these compounds is not critical so long as the compound is soluble in the solvent. Likewise, selection of the exact hydrolyzable substituent is not critical since the substituents are either hydrolyzed or pyrolyzed out of the system. Typical hydrolyzable groups are alkoxy, such as methoxy, propoxy, butoxy and hexoxy, acyloxy such as acetoxy or other organic groups bonded to said metal or non-metal through oxygen such as acetylacetonate. Specific compounds, therefore, include zirconium tetracetylacetonate, titanium dibutoxy diacetylacetonate, aluminum triacetylacetonate, tetraisobutoxy titanium, B₃(OCH₃)₃O₃ and P₃(OCH₂CH₃)₃O.

When H-resin is combined with one of the above ceramic oxide precursors, it is generally used in an amount such that the final ceramic coating contains 70 to 99.9 percent by weight of SiO₂.

The H-resin coating material may also contain a platinum, rhodium or copper catalyst to increase the rate and extent of conversion to silica. Generally, any platinum, rhodium or copper compound or complex which can be solubilized will be suitable. For instance, a composition such as platinum acetylacetonate, rhodium catalyst RhCl₃[S(CH₂CH₂CH₂CH₃)₂]₃, obtained from Dow Corning Corporation, Midland, Michigan, U.S.A., or cupric naphthenate are all acceptable. These catalysts are generally added in an amount of between 5 to 1000 ppm platinum, rhodium or copper based on the weight of H-resin.

The solvents of the present invention are saturated alkyl hydrocarbons, essentially comprising a mixture of octane and up to 40 weight percent decane and/or up to 80 weight percent isooctane.
Each of these solvents should be pure (e.g., > 99%) and should have very low water content (e.g., < 0.1%) to inhibit reactions with the H-resin.

Octane, CH₃(CH₂)₆CH₃, is well known in the art and is available commercially from a variety of sources. Generally, octane is obtained by refining petroleum products.

We have surprisingly found that when octane is used alone to dissolve the H-resin, high quality coatings generally result. Specifically, the coatings generally are featureless and have a uniform color. These coatings are generally less than 610 nm thick using a 24 wt% solution and a 2000 rpm spin speed for coating.

Isooctane, (2,2,4-trimethylpentane) (CH₃)₃CCH₂CH(CH₃)₂, is also well known in the art and available commercially from a variety of sources. Generally, isooctane is also obtained by refining petroleum products.

Contrastingly, we have also found that when isooctane is used alone to dissolve the H-resin, a lower quality coating generally results. Specifically, these latter coatings generally have blotches and striae. Striae are radial streaks of a color different from the film. Blotches are areas of color different from the film. These striae and blotches generally reflect thickness variations in the films. The coatings, however, are often thicker (e.g., > 630 nm using a 24 wt% solution and a 2000 rpm spin speed) than those derived from just octane.

Decane, CH₃(CH₂)₈CH₃, is also well known in the art and available commercially from a variety of sources. Generally, decane is also obtained by refining petroleum products.

When decane is used alone to dissolve H-resin, moderate quality coatings (some blotches and striae) which are quite thin (e.g., 350 nm using a 24 wt% solution and 2000 rpm spin speed) often result.

Accordingly, it is wholly unexpected that the mixing of these solvents, in certain proportions, will yield thicker, high quality coatings. Moreover, these mixtures provide coatings which were surprisingly thicker than those obtained with the individual solvents by themselves.

Specifically, the present invention uses octane, up to 40 weight percent decane, and up to 80 weight percent isooctane to form high quality, thick coatings. These coatings have few, if any, blotches and striae and have a thickness in excess of 610 nm when using a 24 wt% solution of H-resin and a 2000 rpm spin speed.

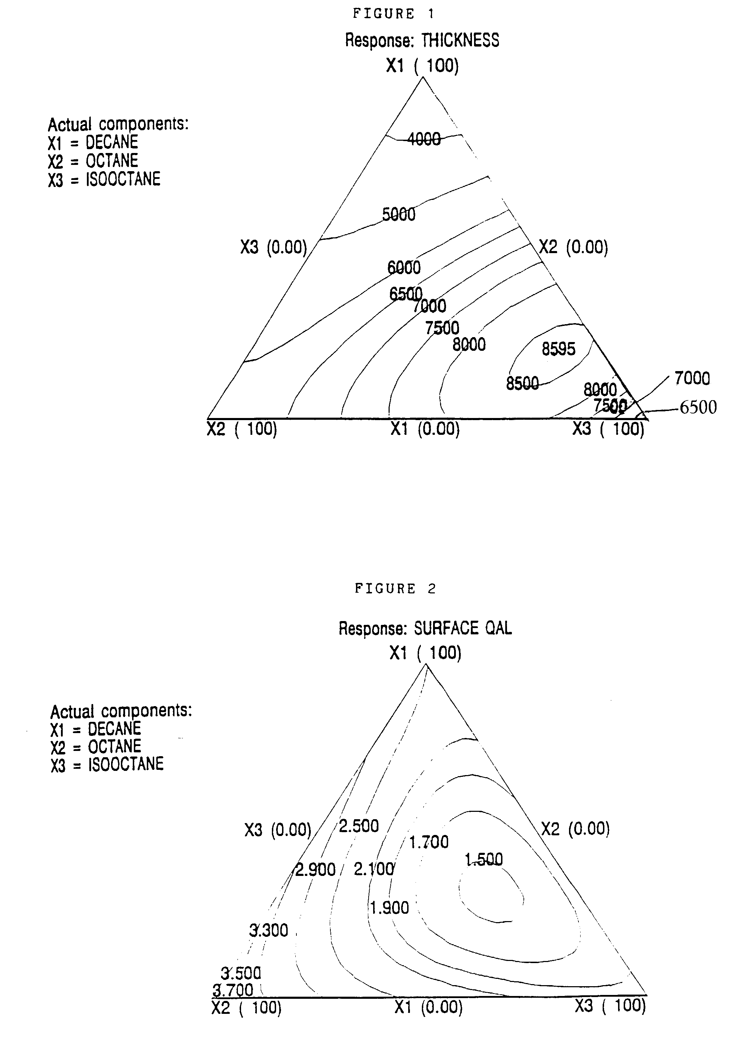

It has surprisingly been found that the solvent system according to the present invention provides thick coatings with an acceptable surface quality as demonstrated by accompanying Figures 1 and 2 wherein:
Figure 1 is a contour plot indicating variation in film thickness as the solvent blend charges; and
Figure 2 is a contour plot indicating variations in film surface quality as a function of solvent composition. Specifically n-decane, n-octane and 2,2,4-trimethylpentane (isooctane) were combined in blends ranging from zero to 100% of each solvent according to a design experiment.

Experimental work was conducted as follows:

Solutions were prepared by dissolving resin in the individual formulated solvent blends and continuously filtering each solution through a 0.1 um polytetrafluoroethylene capsule filter. The filtrations were done in a class 100 clean room. The resin solutions were then used to coat 100 mm silicone wafers on a Semix spin coater. The coated wafers were "converted" by heating them at 400C in a nitrogen atmosphere for three hours. At least five coated wafers were obtained for each solvent formulation. Thicknesses were determined with a Tyger Thin Film Analyser. Surface quality was determined by visual inspection.

It was surprisingly discovered that although a 24.5% hydrogen silsesquioxane solution in n-decane, n-octane and isooctane spin coated at 2,000 rpm provided 3550A, 6200A and 6200A thick films respectively, blends of the three provided coatings which were thicker than the coatings obtained from either of the pure solvents. One blend was predicted to provide an 8600A thick coating and four coatings, from different blends, in excess of 8000A were obtained in the study. The impact of blending solvents can be seen in Figure 1.

Film thickness is a critical characteristic for selection of a solvent system for hydrogen silsesquioxane. An average film thickness of at least 5,000 Å for example 5,000 to 9,000 Å (500 to 900 nm) is desirable. However, other factors are also important such as average surface quality (appearance) and average deviation per wafer or wafer to wafer, which refers to the smoothness of the film coating itself.

Figure 2 illustrates surface quality, which is assessed visually, as a function of solvent composition.

The numbers on this contour plot reflect the variation in coating quality. Quality is determined by the relative amount number of undesired blotches and striae, which are irregularly shaped and linear color variations in the coating. Blotches and striae are totally different colors from the color of the coating itself.

A third coating imperfection is "spray". Spray looks much like striae, however, it is a darker shade of the main coating color and not a different color, as found with striae. These color variations represent differences in coating thickness, an undesirable condition. The best coatings, represented by the highest contour values in Figure 2, have but a single color of unvarying shade across the entire surface.

The visual quality based upon the number and size of blotches, striae and spray, was reduced to a numerical value and recorded as a response. The higher the value, the more perfect the coating. In Figure 2 the highest contour lines represent films having a single color of unvarying shade across the entire surface.

The Figures 1 and 2 show how the solvent composition can be adjusted so as to achieve a thick coating (Figure 1) with an acceptable appearance (film surface quality).

In a preferred embodiment, between 15 and 30 weight percent of H-resin is diluted in a solvent containing between 10 and 25 weight percent isooctane, between 65 and 85 weight percent octane and up to 25 weight percent decane. In our more preferred embodiment, between 15 and 30 weight percent of H-resin is diluted in a solvent containing 20 weight percent isooctane and 80 weight percent octane. In another more preferred embodiment, between 15 and 30 weight percent of H-resin is diluted in a solvent containing 15 weight percent isooctane, 15 weight percent decane and 70 weight percent octane.

In another embodiment of this invention, we use between 60 and 80 weight percent isooctane, up to 40 weight percent octane and up to 40 weight percent decane to form coatings with thicknesses in excess of 800 pm when using a 24 wt% solution of H-resin and a 2000 rpm spin speed.

Preferably, this embodiment uses between 65 and 75 weight percent isooctane, between 10 and 30 weight percent decane and up to 25 weight percent octane to form coatings with thicknesses in excess of 850 nm using a 24 wt% solution of H-resin and a 2000 rpm spin speed.

The compositions of the present invention can also generally contain minor amounts (e.g., less than 5 wt%) of other solvents or additives without affecting the invention and its stable compositions.

The above formulations consistently provide high quality and/or thick coatings as shown in the following examples. As noted earlier, this high quality results from the nearly uniform, featureless surface. Such coatings are very advantageous in the electronics industry. Similarly, our thicker coatings are desirable in the electronics industry because of the spatial separation they can provide.

It should be recognized that thickness variations in our coatings are also affected by factors other than the solvents used to dissolve the resin. Such factors include spin speed and H-resin concentration. These factors should be taken into account when producing coatings with these compositions.

The following examples are included so that one skilled in the art may more readily understand the invention.

### EXAMPLE 1 - Stability Testing

The following test was performed to compare the stability of H-resin in octane, isooctane and decane to other solvents for this material reported in the literature. H-resin (made by the method of US Patent 3,615,272) was diluted to 50 wt% in the solvents listed in Table 1 and then stored at room temperature in 29.6 ml (one ounce) glass vials. The solutions were then visually observed until they gelled. The results are presented in Table 1.

**Table 1**

| Solvent | Days to Gel |
|---|---|
| Methyl Isobutylketone | 2 |
| Octane | 20 |
| Heptane | 37 |
| Isooctane | 41 |
| Decane | 53 |
| Dodecane | 57 |
| Octamethyl Cyclotetrasiloxane | 160+ |

As is apparent, the individual saturated alkyl hydrocarbons taught herein have stabilities similar to those of the other solvents.

### EXAMPLE 2 - Designed Experiment

Seventeen formulations of H-resin dissolved in octane, isooctane and/or decane were prepared for a designed experiment (see Table 2). These formulations were prepared by combining 60 g of H-resin (made by US Patent 3,615,272) and 180 g of solvent and then shaking by hand to achieve slightly hazy solutions. These solutions were then continuously filtered through a 0.1 micrometer capsule filter for 90 minutes. The filtered solutions were pumped into polyperfluoroethylene bottles. The filtering and bottling was performed in a Class 100 clean room. The non-volatile content of each formulation was obtained by weighing approximately 3 g of solution into 3 aluminum cups and heating the samples at 150°C. for 1 hour.

Six, 10.2 cm (4 inch) diameter silicon wafers were coated with each solution by spinning at 2000 RPM on a Semix™ Spin Coater. The coated wafer was then heated to allow the resin to melt and flow. This heating was conducted at 150°C. for 1 minute, 200°C. for 1 minute and 350°C. for 1 minute under an inert atmosphere. The coating was then converted to a ceramic by ramping the temperature up between 40 and 400°C. over 1 hour, holding the temperature at 400°C. for 1 hour and ramping the temperature down from 400 to 40°C. over 1 hour under an inert atmosphere.

A Tyger™ Thin Film Analyzer was used to determine the thickness of the coatings as spun, after flowing and after conversion. The coating thicknesses were measured at the same 9 points on each wafer. The average converted thickness, percent film deviation from average thickness on a wafer and percent deviation from the average of the six films cast for each formulation were recorded as responses.

The visual quality, based upon the number and size of striae and blotches present, was also reduced to a numerical value and recorded as a response. Each wafer was given a value between 1 and 5, with 5 given to a visually perfect coating, depending on the amount of color variation present. The value which was recorded is the average of the six values assigned to the six wafers prepared for each formulation. A value of 5 means that all six coatings appeared featureless.

The average deviation on a wafer and between wafers and average thickness were obtained from the Tyger™ measurements following conversion of the coatings. The average deviation on a wafer is the average of the six deviation values (sigmas), obtained directly from the Tyger™ thickness measurements, divided by the average film thickness. This number represents the average variability of coating thickness on the individual wafers. The average deviation between the wafers is the sigma value for the average thickness value, which is the average of the coating thicknesses of the six wafers prepared with each formulation, divided by the average film thickness. It represents the degree of variability of film thickness between wafers.

The results of this experiment are provided in Table 2.

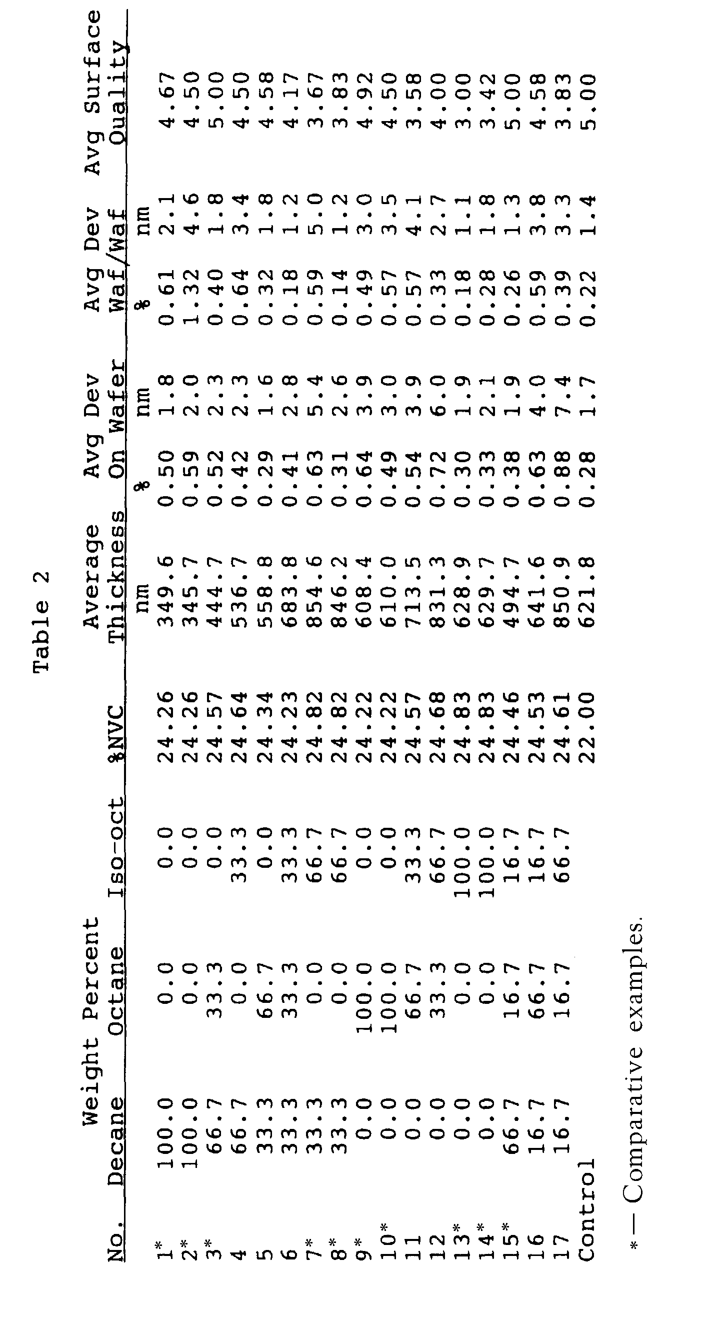

### EXAMPLE 3

Formulations of H-resin dissolved in octane, isooctane and/or decane were prepared in the same manner as Example 2 (see Table 3) except that the coating composition contained 22 wt% H-resin dissolved in the solvent. These formulations were spun onto silicon wafers at 3000 rpm. The coated wafers were then processed and evaluated in the same manner as Example 2. The results of this Experiment are provide in Table 3.

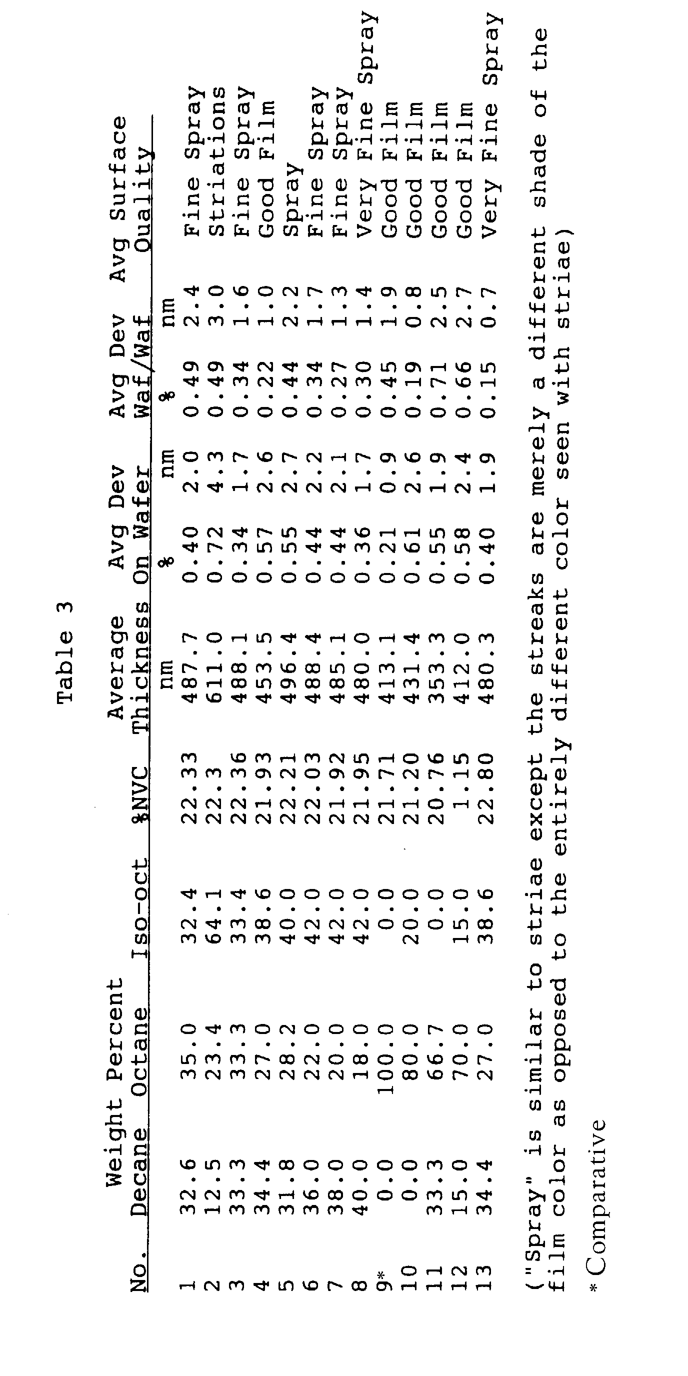

## Claims

1. A coating composition comprising between 10 and 40 weight percent of hydrogen silsesquioxane resin diluted in a solvent comprising a mixture of octane together with decane and/or isooctane wherein the mixture comprises up to 40 weight percent of decane and up to 80 weight percent of isooctane.

2. The coating composition of claim 1 wherein the hydrogen silsesquioxane resin contains polymeric species such that at least 75% of the polymeric species have a molecular weight between 1200 and 100,000.

3. The coating composition of claim 1 or 2 also containing modifying ceramic oxide precursors comprising a compound containing an element selected from the group consisting of titanium, zirconium, aluminum, tantalum, vanadium, niobium, boron and phosphorous wherein the compound contains at least one hydrolyzable substituent selected from alkoxy or acyloxy and the compound is present in an amount such that the silica coating contains 0.1 to 30 percent by weight modifying ceramic oxide.

4. The coating composition according to any of claims 1 to 3, also containing a platinum, rhodium or copper catalyst in an amount of between 5 and 1000 ppm platinum, rhodium or copper, based on the weight of hydrogen silsesquioxane resin.

5. The coating composition according to any of claims 1 to 4, wherein the hydrogen silsesquioxane resin is present in an amount between 15 and 30 weight percent.

6. The coating composition according to any of claims 1 or 2 wherein the solvent contains between 65 and 75 weight percent of isooctane, between 10 and 30 weight percent of decane and up to 25 weight percent of octane.

## Patentansprüche

1. Beschichtungszusammensetzung, enthaltend zwischen 10 und 40 Gew.-% eines Hydrogensilsesquioxanharzes, das mit einem Lösungsmittel verdünnt ist, das eine Mischung aus Octan zusammen mit Decan und/oder Isooctan enthält, wobei die Mischung bis zu 40 Gew.-% Decan und bis zu 80 Gew.-% Isooctan enthält.

2. Beschichtungszusammensetzung nach Anspruch 1, wobei das Hydrogensilsesquioxanharz polymere Spezies enthält, so daß mindestens 75% der polymeren Spezies ein Molekulargewicht zwischen 1.200 und 100.000 aufweisen.

3. Beschichtungszusammensetzung nach Anspruch 1 oder 2, weiterhin enthaltend modifizierende keramische Oxidprecursor, die eine Verbindung enthalten, die ein Element, ausgewählt aus der Gruppe bestehend aus Titan, Zirkon, Aluminium, Tantal, Vanadin, Niob, Bor und Phosphor, enthält, wobei die Verbindung mindestens einen hydrolysierbaren Substituenten, ausgewählt aus Alkoxy oder Acyloxy, enthält und die Verbindung in einer Menge vorliegt, so daß die Siliciumdioxidbeschichtung 0,1 bis 30 Gew.-% modifizierendes keramisches Oxid enthält.

4. Beschichtungszusammensetzung nach einem der Ansprüche 1 bis 3, weiterhin enthaltend einen Platin-, Rhodium- oder Kupferkatalysator in einer Menge zwischen 5 und 1.000 ppm Platin, Rhodium oder Kupfer, bezogen auf das Gewicht des Hydrogensilsesquioxanharzes.

5. Beschichtungszusammensetzung nach einem der Ansprüche 1 bis 4, wobei das Hydrogensilsesquioxanharz in einer Menge zwischen 15 und 30 Gew.-% vorliegt.

6. Beschichtungszusammensetzung nach einem der Ansprüche 1 oder 2, wobei das Lösungsmittel zwischen 65 und 75 Gew.-% Isooctan, zwischen 10 und 30 Gew.-% Decan und bis zu 25 Gew.-% Octan enthält.

## Revendications

1. Une composition de revêtement comprenant entre 10 et 40 pour cent en poids d'une résine d'hydrogénosilsesquioxane diluée dans un solvant comprenant un mélange d'octane avec du décane et/ou de l'isooctane, dans laquelle le mélange contient jusqu'à 40 pour cent en poids de décane et jusqu'à 80 pour cent en poids d'isooctane.

2. La composition de revêtement de la revendication 1, dans laquelle la résine d'hydrogénosilsesquioxane contient des espèces polymères telles qu'au moins 75 % des espèces polymères ont un poids moléculaire compris entre 1200 et 100 000.

3. La composition de revêtement de la revendication 1 ou 2, contenant également des précurseurs d'oxydes céramiques modificateurs comprenant un composé contenant un élément choisi dans la classe formée par le titane, le zirconium, l'aluminium, le tantale, le vanadium, le niobium, le bore et le phosphore, le composé contenant au moins un substituant hydrolysable choisi parmi les groupes alcoxy ou acyloxy et le composé étant présent en une quantité telle que le revêtement de silice contienne 0,1 à 30 pour cent en poids d'oxyde céramique modificateur.

4. La composition de revêtement selon l'une quelconque des revendications 1 à 3, contenant également un catalyseur au platine, au rhodium ou au cuivre, en une quantité comprise entre 5 et 1000 ppm de platine, de rhodium ou de cuivre, par rapport au poids de la résine d'hydrogénosilsesquioxane.

5. La composition de revêtement selon l'une quelconque des revendications 1 à 4, dans laquelle la résine d'hydrogénosilsesquioxane est présente en une quantité comprise entre 15 et 30 pour cent en poids.

6. La composition de revêtement selon l'une quelconque des revendications 1 ou 2, dans laquelle le solvant contient entre 65 et 75 pour cent en poids d'isooctane, entre 10 et 30 pour cent en poids de décane et jusqu'à 25 pour cent en poids d'octane.
